Europäisches Patentamt

**European Patent Office**

Office européen des brevets

(19)

(11) Publication number: **0 234 275**
A2

(12) # EUROPEAN PATENT APPLICATION

(21) Application number: **87100810.8**

(22) Date of filing: **21.01.87**

(51) Int. Cl.³: **A 61 C 13/26**
**A 61 C 13/00**

(30) Priority: **27.01.86 US 822823**

(43) Date of publication of application:
**02.09.87 Bulletin 87/36**

(84) Designated Contracting States:
**AT BE CH DE ES FR GB GR IT LI LU NL SE**

(71) Applicant: **Shoher, Itzhak, Dr.**
**50 Shlomo Hamelech Street**
**Tel Aviv(IL)**

(71) Applicant: **Whiteman, Aharon**
**13 J.L. Perez Street**
**Petach-Tikvah(IL)**

(72) Inventor: **Shoher, Itzhak, Dr.**
**50 Shlomo Hamelech Street**
**Tel Aviv(IL)**

(72) Inventor: **Whiteman, Aharon**
**13 J.L. Perez Street**
**Petach-Tikvah(IL)**

(74) Representative: **Vossius & Partner**
**Siebertstrasse 4 P.O. Box 86 07 67**
**D-8000 München 86(DE)**

(54) Prefabricated dental prosthesis and method of bridge construction.

(57) The prefabricated dental prosthesis for fabricating a dental bridge comprises a metal pontic for filling the edentulous space between abutment teeth and at least one arm connector extending from each opposite interproximal end of the pontic. Each arm connector is pliable and separately adjustable independent of the other for adjustment into a statutory position in physical contact with the abutment tooth to which it is to be attached so as to provide correct alignment of the prefabricated pontic between the abutment teeth. This prefabricated prosthesis eliminates waxing and the entire casting operation.

EP 0 234 275 A2

Croydon Printing Company Ltd.

Case: S-87-1
Dr. Itzhak Shoher
Israel

VOSSIUS·PART:.ER
PATENTANWALTE
8000 MÜNCHEN 06
SIEBERTSTRASSE 4
TELEFON 474075

2 0. Jan. 1987

**0234275**

## PREFABRICATED DENTAL PROSTHESIS
## AND METHOD OF BRIDGE CONSTRUCTION

The present invention relates to a prefabricated dental prosthesis for a dental bridge and to a method for constructing a dental bridge from a prefabricated dental pontic without casting.

## Background of Invention

Crown and bridge prosthodontics is the science and art of the complete restoration of one or more teeth and the replacement of one or more natural teeth with an artificial device. A bridge is used to replace at least one missing tooth and is supported by natural teeth. The bridge includes a pontic which fills the edentulous space and a soldered joint which serves as a connection between the pontic and a retaining member such as a crown formed on an abutment tooth adjacent the pontic.

The primary purpose of the dental bridge is to receive the forces of occlusion and to transmit them through the abutments so that occlusion is restored to the patient, thereby contributing to mastication. The bridge should also augment the ability of the patient to enunciate and maintain the positions of the opposing teeth. The present day construction of a dental bridge is a time consuming, involved and complex process which requires the application of many independent procedures including the following: waxing, spruing, investing, casting, cleaning, trimming, cutting and stoning. The process, as conventionally practiced, is referred to colloquially as the "lost wax casting method" and, at present, is the universally accepted procedure for making a bridge. In following this procedure, each step must be meticulously followed with the dental technician paying strict attention to detail to assure accuracy of the cast product and proper fit. It is not until all of the above steps are completed that the porcelain or other veneering material can be applied and fired to form the finished bridge.

The prefabricated prosthesis of the present invention eliminates waxing and the entire casting operation. Accordingly, there is no waxing, spruing, investing and casting involved nor is cleaning required. The only steps which remain are trimming and grinding and even these steps are limited to the area at the margin. A modified prosthesis of the present invention can also be used in forming a splint for bracing two or more teeth.

The present invention also embodies a method for constructing a dental bridge from a prefabricated dental pontic. The prefabricated dental pontic is joined to a bridge retaining member on each abutment tooth by a welding operation. The welding operation is preferably carried out using a metal insert member to prevent melting of the retaining member during the welding procedure. Welding is not currently practiced in the construction of a crown and bridge since the welding current tends to melt the base metal, whereas in soldering only the solder material is melted. However, a solder joint is a relatively weak joint and is susceptible to fracture, whereas a welded joint is far superior and can be as resistant to fracture as the materials to be joined.

## Summary of the Invention

The dental prosthesis of the present invention comprises a pontic for filling the edentulous space between abutment teeth in the fabrication of a dental bridge with the pontic being prefabricated from metal and having arms extending from opposite ends thereof for joining the pontic to each abutment tooth characterized in that said pontic has one arm extending from each interproximal end for attachment to an abutment tooth with each arm being separately adjustable into any stationary position independent of the position of each other arm.

The method of the present invention for constructing a dental bridge to an abutment tooth or between abutment teeth upon which metal retaining member(s) are mounted comprises the steps of:

prefabricating a pontic having adjustable arms extending outwardly from opposite ends thereof to fill the edentulous space between the abutment teeth;

suspending the pontic between the retaining members so that the arms support the pontic;

adjusting each arm into a fixed position in physical contact with each retaining member so that the pontic is aligned between the abutment teeth and introducing welding current through each arm and each retaining member to form a spot weld therebetween. The spot welding operation may be carried out with the insertion of a metal spacer between each arm and each retaining member as will be explained in greater detail hereinafter.

## Objects of the Invention

It is the principal object of the present invention to provide a prefabricated prosthesis for making a dental bridge without casting.  It is another
principal object of the present invention to provide a method for constructing a dental bridge from
a prefabricated pontic without casting.

Description of the Drawings

Other objects and advantages of the present
invention will become apparent from the following
detailed description of the invention when read in
conjunction with the following drawings of which:

Figures 1A and 1B represent the side and
top view respectively, of one embodiment of a prefabricated prosthesis for a posterior tooth in
accordance with the present invention;

Figure 2 is a side elevation of the
prefabricated prosthesis of Figure 1 fitted in place
upon adjacent copings of abutment teeth in the
fabrication of a bridge;

Figures 3A and 3B represent the side and
top view respectively of another embodiment of a
prefabricated prosthesis for a posterior tooth in
accordance with the present invention;

Figure 3C is a top view of an embodiment
similar to Figure 3B with modified arm connectors;

Figure 3D is another top view of a further
embodiment similar to Figure 3B showing yet another
modified arm connector design;

Figures 4A and 4B represent the side and
top view respectively of yet another embodiment of
a prefabricated prosthesis for a posterior tooth in
accordance with the present invention;

Figure 4C is a side-view of an embodiment
similar to Figure 4A with solid metal arm connectors;

Figures 5A and 5B represent a side and
top view respectively of a prefabricated prosthesis similar to Figure 1 with a modified pontic design for forming an anterior bridge;

Figure 6 is a view in elevation of a prefabricated prosthesis in accordance with the present invention for forming a splinted abutment between adjacent teeth;

Figure 7 is a side elevation of the prosthesis of Figure 6 mounted on the side of adjacent teeth for forming the splinted abutment;

Figure 8A is an exploded view in perspective of the prosthesis for constructing a dental bridge in accordance with the method of the present invention;

Figure 8B is a view in perspective of the assembled prosthesis of Figure 1 in preparation for spot welding;

Figure 8C is a view in perspective showing a fully constructed dental bridge in accordance with the present invention; and

Figure 8D is a magnified view of the cross section of the metal spacer showing Figures 8A to 8C;

Figure 9 is a side elevation of the assembled dental bridge of Figure 8B before spot welding;

Figure 10 is a top view of the bridge assembly of Figure 9;

Figure 11 is a perspective view of the prefabricated pontic of Figure 1;

Figure 12 is a perspective ivew of a prefabricated anteior pontic for use in constructing a dental bridge; and

Figure 13 is a side elevation of a four unit pontic bridge formed in accordance with the present invention.

Detailed Description of the Invention

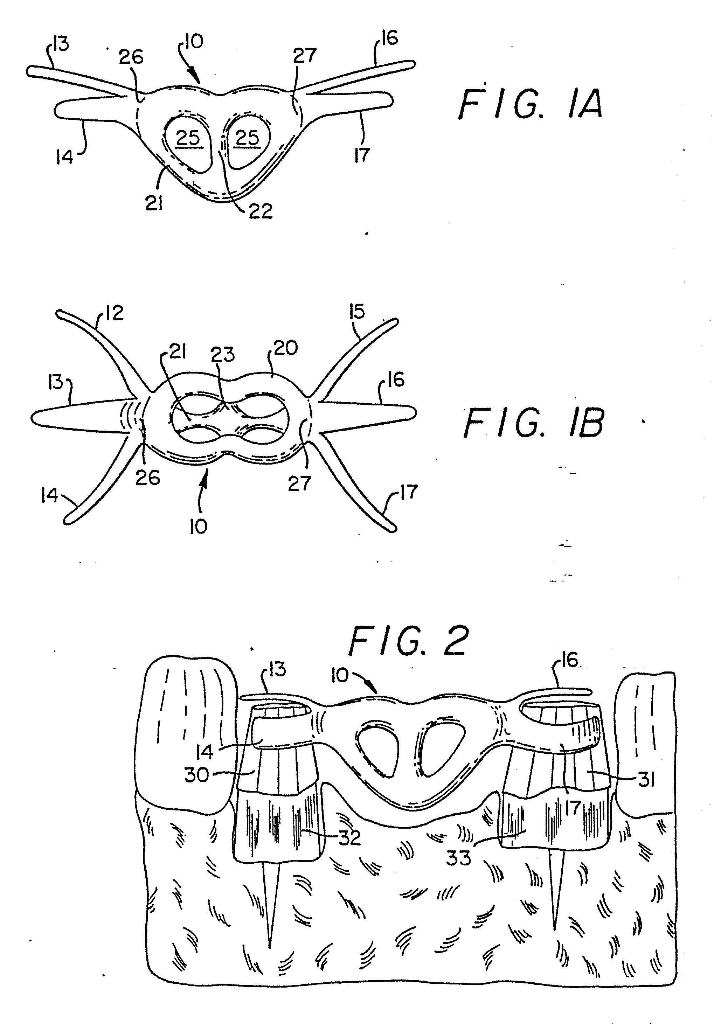

The prefabricated prosthesis shown in Figures 1-7 are alternate embodiments of the present invention. The embodiments of Figures 1-5 all show a preformed pontic in a preferred configuration for either a molar or anterior restoration and alternate embodiments of a plurality of arm connectors for attaching the pontic to the retaining members on the abutment teeth. The present invention contemplates the use of any pontic design in combination with any of the arm connector arrangements. In fact, the pontic may be a solid mass and may vary considerably in construction and shape based upon whether a molar or anterior restoration is involved. The prefabricated structures of Figures 1-7 may be fabricated from any desired metal or metal composition although the selection of the metal or metal composition should meet the standards of compatibility for use in the oral cavity. Accordingly, a precious or semiprecious metal, metal alloy or composition preferably comprising gold is preferred. In addition, any conventional manufacturing method may be used to fabricate the prosthesis of the present invention including die casting and stamping.

The prosthesis shown in Figures 1A and 1B include a pontic 10 and arm connectors 12, 13, 14, 15, 16 and 17, respectively. Although the geometry of the pontic 10 is not critical to the present invention, it is preferred that the pontic 10 be designed having a cradle like shape in accordance with the principles of construction taught and described in U.S. Patent 4,231,740. The pontic 10 includes a plurality of metal members 20, 21, 22 and 23, which interconnect to form a cradle like structure with a large occlusal concavity. The pontic 10 has open spaces 25 between the interconnected members both on the buccal and lingual surfaces which form an open framework. The metal member 21 is looped occlusocirvically from the interproximal ends 26 and 27 to form an arch. The intermediate members 22 and 23 extend between the members 20 and 21 and function as brace supports. The member 20 is an oval or elliptically shaped member which lies in the occlusal plane between the interproximal ends 26 and 27. The member 20 is depressed to form a surface concavity facing the occlusal surface. Although the design of the pontic 10 should preferably conform to the design criteria taught in U.S. Patent 4,231,740, it is not limited thereto. Any pontic design may be used in conjunction with arm connectors as hereinafter described to form the prosthesis of the present invention.

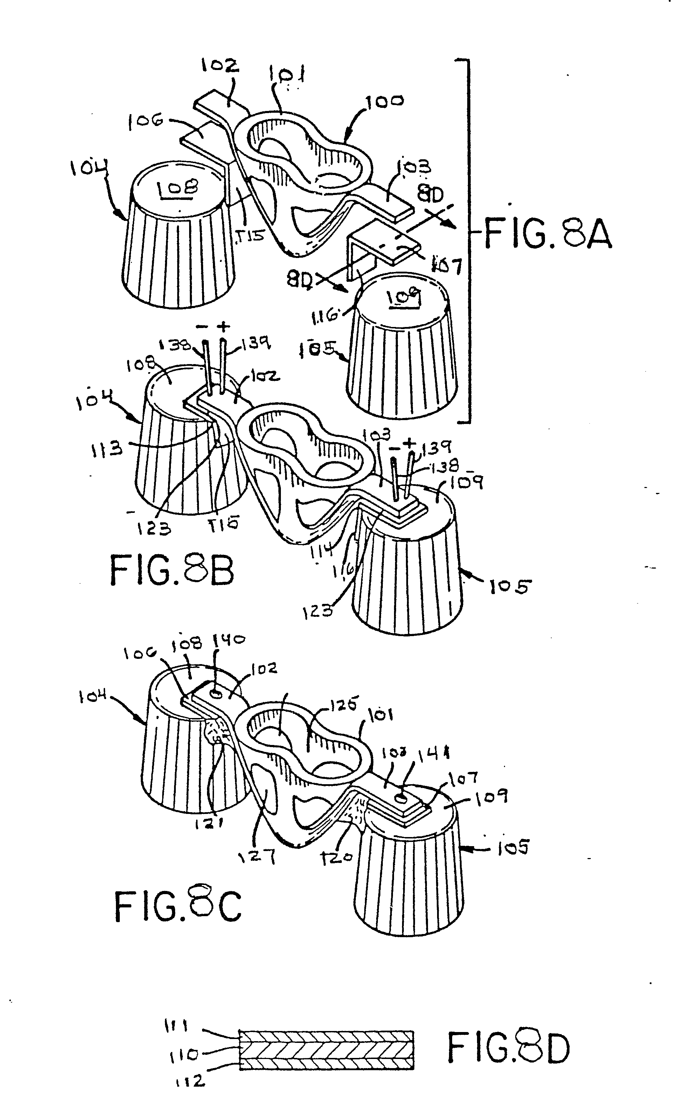

The pontic 10 has one set of arm connectors 12, 13 and 14, extending from the interproximal end 26 and another set of arm connectors 15, 16 and 17, extending from the interproximal end 27. Although a plurality of arm connectors are shown only two arm connectors are required with each arm extending from an opposite interproximal end of the pontic as shown in Figures 8, 11 and 12. The arm connectors interconnect the pontic 10 to the adjacent abutment teeth to form a conventional three unit bridge. A cantilever bridge may also be formed consisting of a pontic and only one set of arm connectors. A multiple unit bridge may also be formed with two attached pontics and a set of arm connectors extending from the opposite ends of the joined pontics. All of the embodiments of Figures 1-5 are examples of a prefabricated prosthesis for a three unit bridge.

The arm connectors 12, 13, 14, 15, 16 and 17 should be relatively thin and relatively flexible so that they can be adjusted into a desired position adjacent to and in physical contact with the abutment teeth. The critical requirement for each arm is that it be adjustable into any stationary position independent of the position of the other arm. In this way, the pontic can be adjusted into any desired alignment relative to the abutment teeth to accommodate for spatial differences in both position and distance between abutment teeth.

Figure 2 is an example of an arrangement for attaching the prosthesis of Figure 1 to a pair of metal crown copings 30 and 31, in the preparation of a bridge. The metal crown copings 30 and 31 may be fabricated in any conventional manner including casting. It is, however, preferred that the crown copings 30 and 31 be prefabricated as is taught in U.S. Patent 4,459,112. In accordance with such patent teaching, the crown copings 30 and 31 would be preformed from metal foils. The foils are mounted over prepared dies 32 and 33 of the abutment teeth of the bridge and adapted to each die using a conventional swaging device. The adapted crown copings 30 and 31 and the dies 32 and 33 upon which they were adapted are returned to the model as shown in Figure 2.

The preparation of the abutment teeth do not require metal copings to practice the present invention nor is the preparation limited to the construction of a dental crown for each abutment tooth. Accordingly, the arm connectors of the present invention may be attached upon any conventional abutment tooth preparation or type of restoration including a partial crown and a metal inlay.

The arm connectors 12, 13 and 14 are mounted on the coping 30 with the arm 12 pressed into a stationary position against the buccal surface, the arm 14 pressed into a stationary position over the lingual surface and the arm 13 pressed into a stationary position over the occlusal surface. The length of each arm connector 12, 13 and 14 must be sufficient to make reasonable surface area contact with the buccal, lingual and occlusal surfaces respectively, to form reasonably good contact. The other set of arm connectors 15, 16 and 17, are adjusted into position against the coping 31 in a similar manner. It is emphasized that it is not critical to the present invention to use a pontic having a plurality of arm connectors. The arm connectors 13 and 16 may be used alone without connectors 12, 14 and 15, 17, respectively.

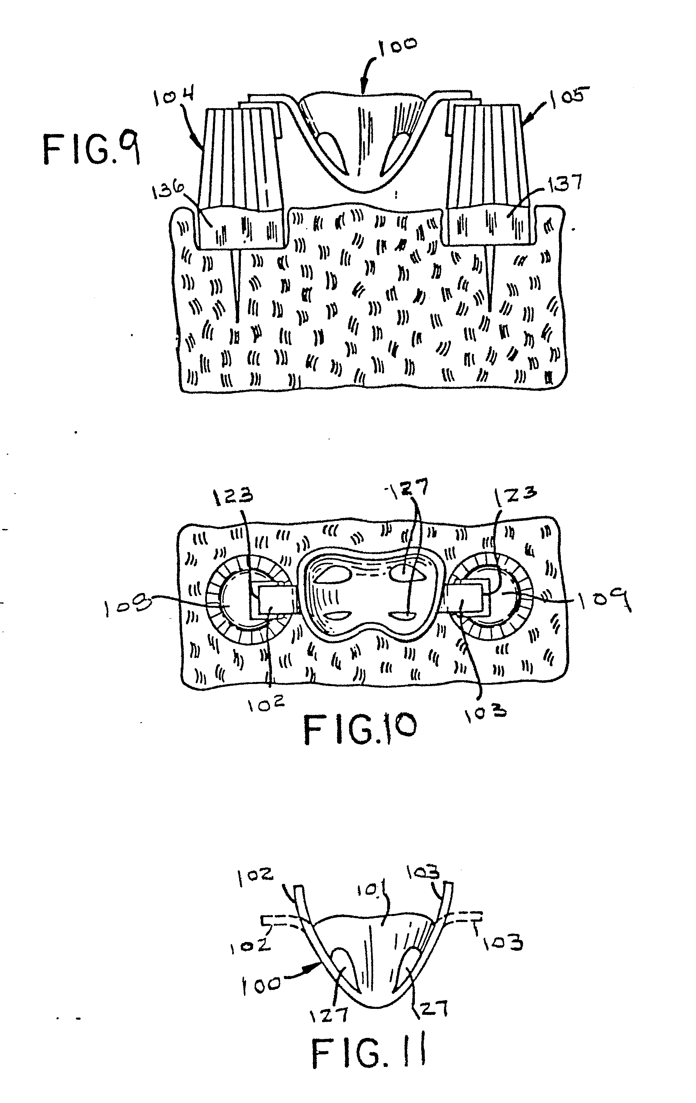

A bond between each of the arm connectors 12-17 and the retainer surface to which it has been physically attached may be formed in any conventional fashion using any conventional bonding or solder composition. It is, however, preferred to spot weld or spot fuse each arm to the respective coping surface against which the arm has been placed, as will be taught in greater detail hereinafter in connection with Figures 8 to 12.

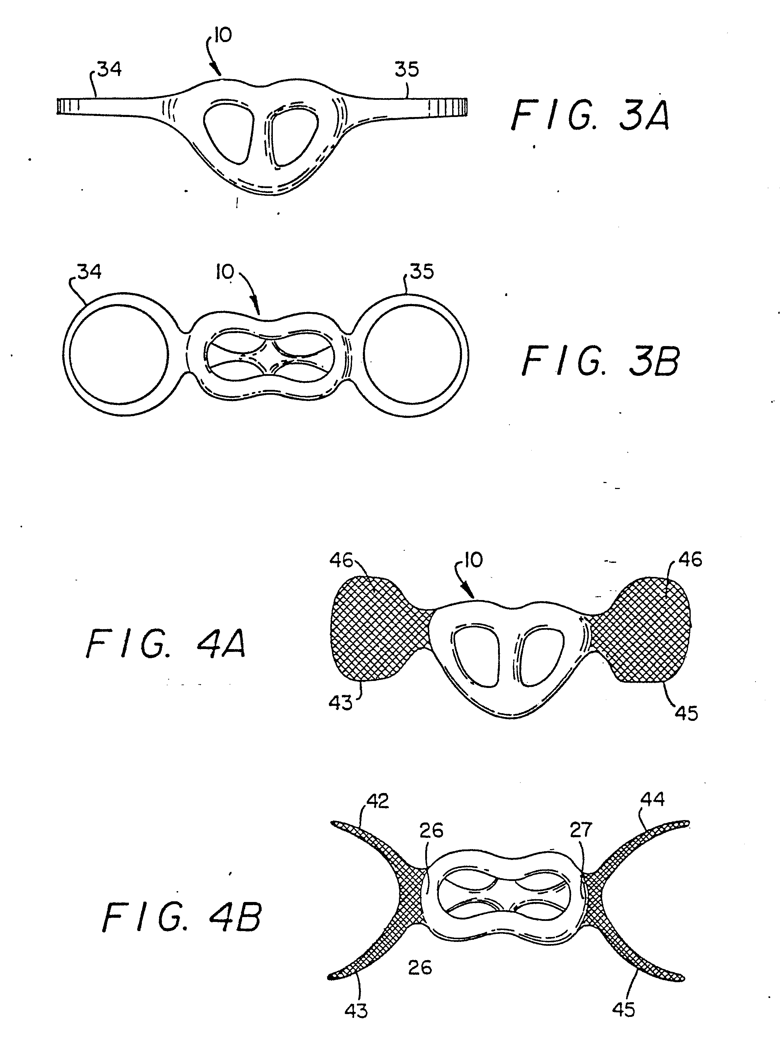

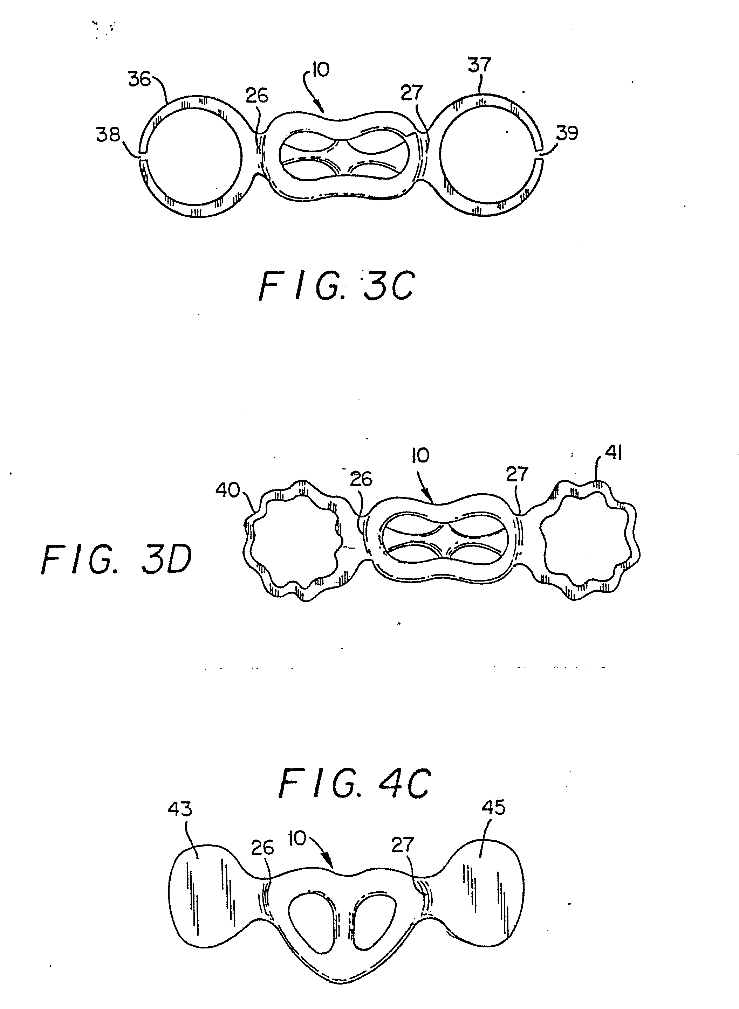

Figures 3A and 3B show an alternative three unit prosthesis using the same pontic 10 as shown in Figure 1. In this embodiment, ring-like arm connectors 34 and 35 are used in place of the corresponding individual arms 12, 14 and 15, 17 of Figure 1. Each ring-like arm connector 34 and 35 is slipped over the retaining member on an abutment tooth and bonded or spot welded to the retainer member as described with respect to the attachment of the arm connectors to the copings of Figure 2. A connector for the occlusal surface is preferred although not shown. The set of arm connectors 12 and 14 and the set of arm connectors 15 and 17 of Figure 1B may also be replaced with arm connectors as shown in Figures 3C and 3D respectively. In Figure 3C the arm connectors 36 and 37 are ring-like members similar to Figure 3B except for slitted openings 38 and 39. The slitted openings 38 and 39 permit the arm connectors 36 and 37 to expand to accommodate different size retainer copings. In Figure 3D the arm connectors 40 and 41 have a rippled or corrugated geometrical shape which permits its expansion to accommodate different size retaining members. In each case, a connector for the occlusal surface such as the arm connectors 13 and 16 of Figure 1B may be used with any of the various alternate arm connector embodiments and is in fact preferred. The ring-like arm connectors 36, 37 of Figure 3C and that of Figure 3D is mounted by slipping it over a corresponding retaining member on an abutment tooth and bonded or spot welded as described heretofore in connection with Figure 2. It should be kept in mind that the arm connectors are flexible. and independently adjustable so that each may be adjusted into a separate position to accommodate for lack of alignment between abutment teeth.

Figures 4A and 4B show yet another alternative design for the arm connectors using, for illustrative purposes, the same pontic design 10 as that of Figures 1, 2 and 3. In this case, each of the arm connectors 42, 43, 44, and 45, are in the form of a metal mesh with open spaces 45. In this form, the arm connectors 42, 43, 44 and 45 may form a larger surface area than the corresponding connectors of Figures 1 and 3, although the amount of metal used in forming the arm connectors of Figure 4 may be substantially equal to the metal used in forming the connectors of Figures 1, 2 and 3. Figure 4C is an alternative to Figure 4A in which the same butterfly shape is used for the arm connectors 43 and 45 as indicated in Figure 4B but of solid metal instead of metal mesh.

In all of the embodients of Figures 1, 3 and 4, the arm connectors extending from the interproximal ends 26 and 27 of the prosthesis have been shown to be symmetrically compatible with each other. Obviously, for a given situation it may be desirable to use one type of arm connector on one side of the pontic and another type of arm connector on the opposite side or only one set of arm connectors. The arm connectors for the occlusal sufraces may also be used alone without any of the other arm connectors or in any combination therewith.

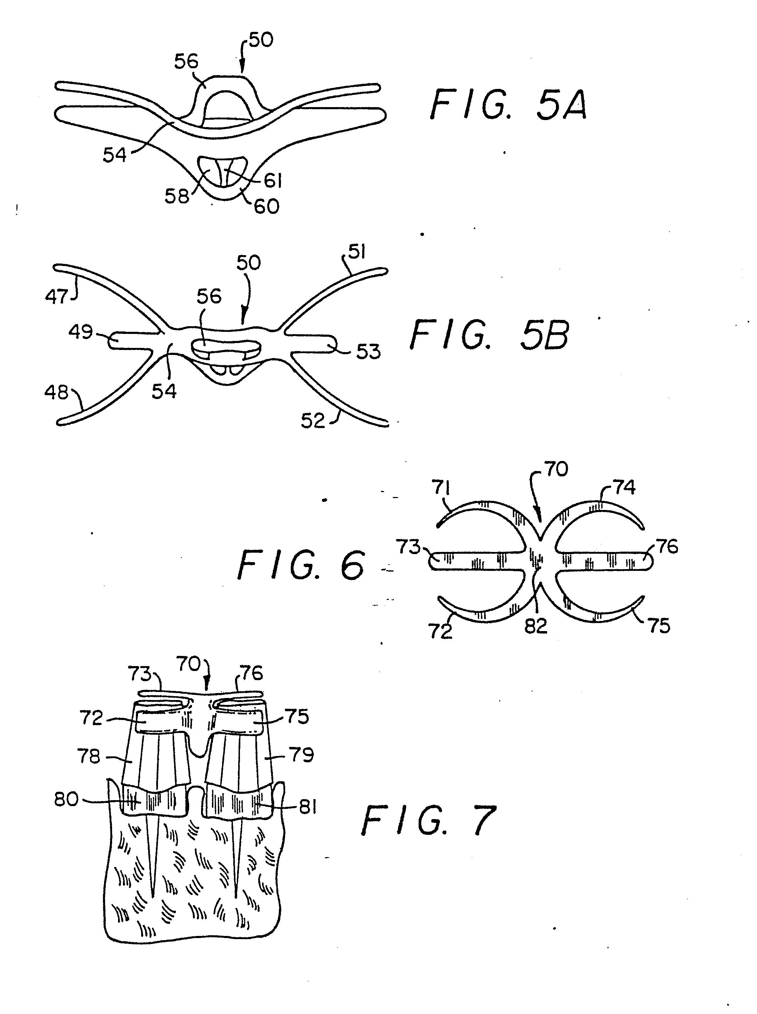

The pontic 10 is preferably used in the construction of a prosthesis for a posterior bridge. Figures 5A and 5B show a prosthesis design for an anterior bridge.

The design of the arm connectors 47, 48, 49, 51 and 52 and 53 are identical to the corresponding arm connectors of Figure 1 although the configuration of the arm connectors of any of the embodiments in Figures 3 and 4 may equally have been used. The design of the pontic 50 in Figures 5A and 5B is the preferred pontic design for an anterior tooth in 4,318,697. The primary difference in the design of pontic 50 from that of pontic 10 is the use of an upper crescent-shaped surface 54 which extends upright from the crescent surface 54 toward the incisal edge of the restoration.  The pontic design
50 also provides for open spaces 58 which forms an
open framework between the interconnecting metal
member 60 and 61 of the pontic 50.  The interconnecting members form a central occlusal concavity corresponding to the open space 58.

The prosthesis design of the present invention
may also be used to form a splint 70 using a
combination of arm connectors without a pontic as
shown in Figures 6 and 7.  The splint 70 may use any
of the arm connector arrangements shown in Figures
1-5.  For simplicity of explanation, the arm connectors 71, 72, 73, 74, 75 and 76 of Figure 6 have been
selected to correspond to the arm connectors 12, 13,
14, 15, 16, and 17 of Figure 1B and are joined to the
retainer copings 78 and 79 of abutting teeth dies
80 and 81 in a manner corresponding to the joining
of the arm connectors of Figure 1B to the crown copings
30 and 31 of Figure 2.  The set of arm connectors 71,
72 and 73 join the set of arm connectors 74, 75 and 76
at the interproximal joint 82 which is seated between
the adjacent abutting teeth to be restored.  The
occlusal arm connectors 73 and 76 are preferred and
may be used alone without the other arm connectors
or in any combination thereof.

The method of constructing a dental bridge using
a prefabricated pontic in accordance with the present
invention is shown in Figures 8A to 8C.  The metal
pontic 100 has a shaped body 101 and two arm connectors 102 and 103 respectively.  The metal pontic may
also have arms for attachment about the buccal and
lingual surfaces as explained heretofore.  The arm
connectors 102 and 103 permit the pontic 100 to be
suspended between the metal retainers 104 and 105
in the construction of a dental bridge.  The arm connectors 102 and 103 are adjustable as explained heretofore for positioning and aligning the pontic 100 between the abutment teeth (not shown) upon which the retaining members 104 and 105 are disposed.

The metal retaining members 104 and 105 protect the abutment teeth and serve as structural supports. In the construction of a crown, particularly a full crown, the metal retainer is referred to as a metal coping. The design of the metal retainer is not critical to the present invention nor is its configuration or method of construction. However, when a metal retainer is prefabricated from a metal foil as disclosed, for example, in U.S. Pat. Nos. 4,273,580; 4,459,112; and 4,492,579, respectively, the metal retainer should be relatively thin and in general under 150 microns with an occlusal surface of usually only between 30 and 100 microns. If the retaining members are very thin they may still be welded following the practice of the present invention by using metal spacers 106 and 107 respectively.

The metal spacers 106 and 107 are preferably in the form of metal strips which function to reinforce the occlusal surfaces of the metal retaining members to permit the arm connectors 102 and 103 to be spot welded to the thin metal retaining members 104 and 105 without concern that holes will be formed in the metal retainers from the welding operation. Although a very experienced welder may be able to adjust the welding current and voltage to avoid the need for metal spacers, the operation becomes much too sophisticated for the average dental technician. However, if the metal retainer 104 and 105 are constructed from thick metal foil or are cast, the spacers 106 and 107 are not needed.

The metal spacer 106 and 107 are inserted between the arm connectors 102 and 103 of the pontic 10 and the occlusal surfaces 108 and 109 of the metal retaining members 104 and 105, respectively. Each of the metal spacers 106 and 107 may be composed of a precious metal gold alloy having a relatively high fusion temperature of at least about 1200°C but preferably above 1250°C. The preferred construction for each metal spacer 106 and 107 is a laminated composite of multiple metal layers as shown in Figure 8D. In the arrangement of Figure 8D each spacer has a central layer 110 of high fusion temperature precious metal such as palladium and/or platinum individually or as an alloy separated on both sides by a gold or gold alloy layer 111 and 112. Each metal spacer 106 and 107 is preferably bent to form an elbow 113 and 114 corresponding to the bend in the retaining members 104 and 105 between the occlusal and proximal surfaces respectively. This simplifies mounting the spacers upon the retaining members and provides a depending section 115 and 116 which lies on the proximal side of the retainers. The depending sections 115 and 116 of each spacer provides a surface for readily forming interproximal solder joints 120 and 121, respectively.

The spacers 106 and 107 have a predetermined thickness based on the thickness of the arm connectors 102 and 103 to provide an overall thickness of metal measured occlusally from the abutment teeth equal to not more than 500 microns. A suitable thickness for each of the metal spacers 106 and 107 lies between 80-150 microns with about 120 microns optimum. The overall dimensions for the spacers is not critical to the invention. The length and width dimensions of the spacers 106 and 107 need only be sized to cover a relatively small surface area of the occlusal surfaces 107 and 109, as shown in both Figures 8C and 11. The surface area delimited by the spacers 106 and 107 should, however, be slightly larger than the area covered by the arm connectors 102 and 103 so as to form a border 123 as shown in Figures 8B, 8C and Figure 11, respectively. The border 123 facilitates mounting the arm connectors 102 and 103 without forming an overhang and more importantly causes an increase in the distribution of forces applied through each arm connector over a large occlusal surface area.

The pontic 100 is a prefabricated structure which may be constructed as explained heretofore using any conventional manufacturing method including die casting although stamping is preferred. The present invention contemplates the use of any pontic design or configuration for the body 101 with the arm connectors 102 and 103 representing adjustable extensions which are adapted to be positioned over the occlusal surfaces 108 and 109 of the metal retainers 104 and 105, respectively. The arm connectors 102 and 103 must be sufficiently flexible so that each can be independently adjusted into position over the retaining members to establish perfect alignment between the abutment teeth and the pontic 100. The arm connectors should be capable of being bent either with one's hands but preferably requiring a tool such as a pair of pliers. Although pliable, the arm connectors 102 and 103 should also provide body and strength. A thickness of between 200-300 microns should provide satisfactory strength and flexibility. The arm connectors should also have a width larger than its thickness and preferably between 1-3mm in width. The thickness of the arm
connectors, metal spacer and the retaining member
should not exceed about 500 microns.

Although the geometry of the body 101 of the
pontic 100 is not critical to the present invention
it is preferred that the pontic body 101 be
designed with a cradle-like shape for a posterior
tooth as shown in Figures 8-11. The cradle-like
geometry of the pontic body 101 should form a large
occlusal concavity 125 which is adapted to be filled
with veneer material such as porcelain after the
construction of the bridge is completed. The pontic
body 101 should have open spaces 127 so that the
body 101 functions as a reinforcing structure for
the porcelain.

The pontic 100 for an anterior tooth is preferably designed as shown in Figure 12. The principles
of construction for an anterior pontic is similar to
that for a posterior pontic. Open spaces 127 are
formed between interconnecting metal members 129 and
130 both on the buccal and lingual sides which form
an open framework. The member 129 is looped in
the shape of a "U" on the buccal side of the restoration and depends gingivally from a relatively crescent
shaped member 131 which lies in a mesial distal plane
in the completed restoration. The member 130 joins
the member 124 to the crescent shaped member 131
occlusocirvically. The crescent shaped member 131
provides a surface concavity facing the occlusal
surface. An additional metal member 132 extends
upright from member 131 to form a loop with a space
133. The space 133 forms a porcelain pocket after
the veneer material is applied and fired which places
the porcelain in compression. The upright member 132
acts as a brace to provide resistance to impact directed at the incisal edge of the anterior tooth. The principles of construction for the anterior pontic is taught in U.S. Pat. 4,318,697.

The pontic 100 may be fabricated from any desired metal composition which meets the standards of compatibility for use in the oral cavity. Accordingly, any conventional precious or semiprecious metal or alloy composition presently known for forming a pontic may be used although a gold alloy is preferred.

The prosthesis assembly is assembled for constructing a dental bridge by mounting the metal spacers 106 and 107, if used, over the bridge retaining members 104 and 105 as shown in Figures 8A and 8B. The pontic arm connectors 102 and 103 are then placed upon the spacers 106 and 107 over the occlusal surfaces 108 and 109 of the retaining members 104 and 105 respectively, preferably leaving a slight border 123 exposed around the periphery of the arm connectors 102 and 103. Each arm connector 102 and 103 may now be spot welded to the retaining members 104 and 105. It is preferred that during the spot welding of one of the arm connectors the other arm connector should be held secured to the retaining member upon which it is seated using a jig or vise such that the alignment of the pontic is maintained during the spot welding procedure. It should be understood that the spot welding operation is carried out on the working model with the bridge retaining members 104 and 105 in place on the respective dies 136 and 137 of the abutment teeth as shown in Figure 9.

The spot welding operation is carried out using two electrodes 138 and 139 which are held initially against the arm connector 102 in relative close proximity.  The electrodes are connected to a welding power supply (not shown). Electric current flows from one electrode to the other through, e.g., the arm connector 102, spacer 106 and retaining member 104, causing localized melting which permits the parts to coalesce and form a welded joint 140.  Spot welding is a well known welding process applied to relatively thin sheets of metal using electrodes of high conductivity held in contact with the metal to be joined. The electrodes conduct heat from the contact spot until the resistance heat at the contact spot causes the sheets to fuse together.  The spacers 106 and 107 permit fusion to occur with the base metal of each retaining member 104 and 105 without concern for forming a hole in the retaining members.  The high fusion temperature composition of the metal spacers alloys with the base metal so that the welded joints 140 and 141 will not open during soldering or during porcelain firing. After the arm connector 102 is welded to the retaining member 104 the spot welding operation is carried out between the arm connector 103 and the retaining member 105 to form the welded joint 141.

For maximum strength and rigidity, the pontic 100 should also be soldered to the retaining members 104 and 105 following the spot welding operations to form the solder joints 120 and 121. The solder joints 120 and 121 should be formed in the interproximal space between the pontic 100 and each retaining member 104 and 105 contiguous to each arm rest 102 and 103.  The soldering operation is performed directly on the working model by directing solder in each area directly below each arm rest 102 and 103 between each depending section 115 and 116 and the proximal side of the pontic 100.

Forming a soldered joint in combination with the weld joint is preferred to distribute the forces to the interproximal. It is, however, not critical to the present invention.

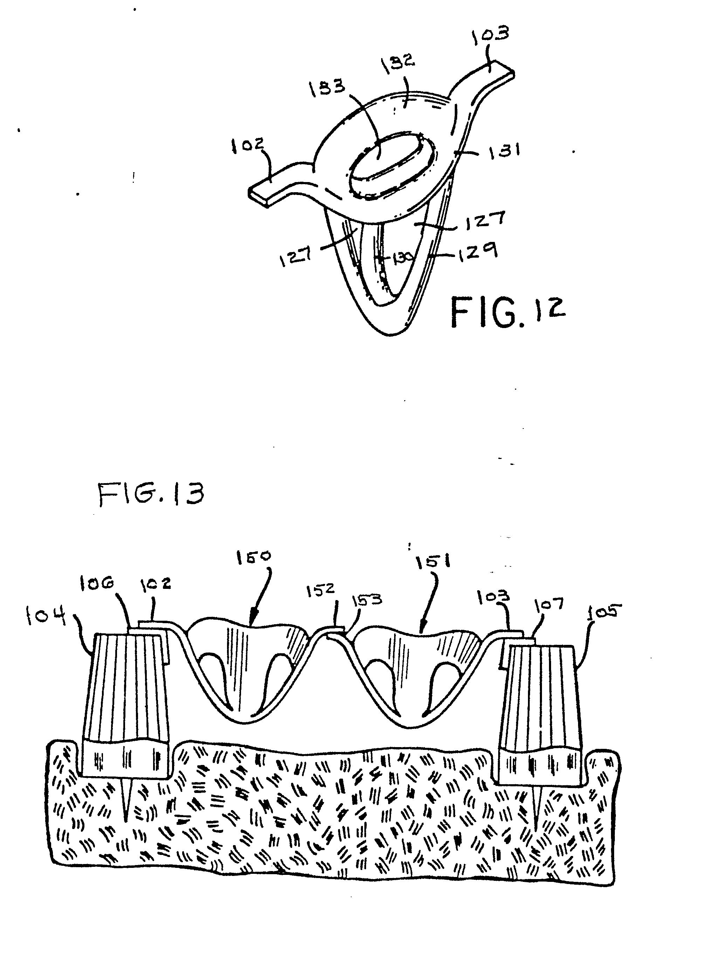

The method of the present invention as shown in Figures 1-3 is used for the construction of a typical three unit bridge in which the pontic is supported on both sides by a metal retaining member. The invention is equally applicable to a cantilever bridge with only one retaining member (not shown) and to a four or more unit bridge containing multiple pontics connected in series. A four unit bridge is shown in Figure 13 with the two pontics 150 and 151 connected together by overlapping the arm connectors 152 and 153 and welding them together. The two pontics 150 and 151 may also be formed as an integral unit having the arm connectors 152 and 153 formed as one solid member. The arm connectors 102 and 103 have been given the same reference numbers as their counterparts in Figures 1-3 to identify their equivalence. If the arm rests 152 and 153 are welded together it is preferred to also solder the welded joint at the interproximal. When pontics are to be joined together, the overlapping arms 152 and 153 should preferably be shortened by cutting the ends so as to make the joint between the pontics stronger.

The method of constructing a four unit bridge is basically no different from that of the three unit bridge shown in Figure 8 once the pontics 150 and 151 have been united. Each of the pontic bodies is identical to the pontic body 101 of pontic 100. The prosthesis assembly for a four unit bridge differs only by an additional pontic from the three unit bridge.

As earlier stated, it is the principal function of the metal spacers 106 and 107 to reinforce the occlusal surfaces 108 and 109 of the retaining members 104 and 105 to facilitate spot welding the arm connectors 102 and 103 to retaining members made from very thin metal foil. Obviously, the spacers can also be separately bonded or soldered to the occlusal surface of the retaining member after it is adapted to the die to form a coping with a reinforced occlusal surface. In such case, the arm connectors can be directly welded to the reinforced retaining member. In either case, the broad concept of the present invention covers suspending a pontic with pliable arm connectors between the occlusal surfaces of the retaining members, adjusting the arm connectors to align the pontic to the abutment teeth with each arm connector being spot welded to a retaining member with or without a spacer therebetween and preferably soldering the interproximal space between the pontic and each retaining member. The prosthesis of the present invention broadly covers a prefabricated pontic having non-rigid pliable arm connectors which extend from opposite ends thereof for attachment to abutment teeth.

WHAT WE CLAIM IS:

1. A prefabricated dental prosthesis for fabricating a dental bridge comprising a metal pontic for filling the edentulous space between abutment teeth and having at least one arm connector extending from each opposite interproximal end of the pontic characterized in that each arm connector is pliable and separately adjustable independent of the other for adjustment into a stationary position in physical contact with the abutment tooth to which it is to be attached so as to provide correct alignment of the prefabricated pontic between the abutment teeth.

2. A dental prosthesis as defined in claim 1 wherein each arm connector extends over the occlusal surface of the abutment tooth to which it is to be attached.

3. A dental prosthesis as defined in claims 1 or 2 characterized by at least one additional arm connector extending from each opposite interproximal end of the pontic.

4. A dental prosthesis as defined in claim 3 wherein each additional arm connector extends mesial distally on each opposite side of said pontic with each such additional arm connector being independently adjustable.

5. A dental prosthesis as defined in claim 4 wherein said additional arm connector is in the form of a ring.

7. A dental prosthesis as defined in claim 5 wherein said ring is corrugated to provide expansion to fit any size tooth.

8. A dental prosthesis as defined in claim 1 or 3 wherein one arm connector on each opposite end of the pontic has an open web shape.

9. A dental prosthesis in accordance with any of the preceding claims wherein said pontic has an open framework of metal members.

10. A method of fabricating a dental bridge to an abutment tooth or teeth upon which metal retaining member(s) are mounted comprising prefabricating a pontic having an arm connector extending from each opposite interproximal end thereof and suspending the pontic between the metal retaining members so that the arms support the pontic characterized in that each arm connector is prefabricated to be pliable with each arm connector being separately adjusted into a stationary position in physical contact with each retaining member so that the pontic is correctly aligned between the abutment teeth and introducing welding current through each arm and each retaining member to form a spot weld therebetween.

11. A method as defined in claim 10 further characterized by inserting a metal spacer between each arm and each retaining member before spot welding.

12. A method as defined in claim 10 or 11 further characterized by soldering the pontic to each retaining member at each interproximal
end.

13. A method as defined in claim 12 wherein
said metal spacer is composed of a plurality of
metal layers.

14. A method as defined in claim 13 wherein
said metal spacer has at least three metal layers
with the outer layers of gold or a gold alloy.

15. A method as defined in claim 11 or 13
wherein the metal spacer is bent to cover the
occlusal surface of the metal retainer and the
proximal surface.

16. A method as defined in claim 15 wherein
the thickness of each arm connector, metal spacer
and metal retaining member is selected to be less
than about 500 microns measured occlusally from
the abutment teeth.

17. A method as defined in any of the preceding claims wherein said pontic has a plurality
of arm connectors extending from each interproximal
end.

18. A method as defined in any of the preceding claims wherein more than one pontic is used
to form a bridge with more than 3 units with each
additional unit corresponding to the number of
additional pontics used.

FIG. IA

FIG. IB

FIG. 2

FIG. 3A

FIG. 3B

FIG. 4A

FIG. 4B

FIG. 3C

FIG. 3D

FIG. 4C

FIG. 5A

FIG. 5B

FIG. 6

FIG. 7

FIG.8A

FIG.8B

FIG.8C

FIG.8D

FIG.9

FIG.10

FIG.11

FIG. 12

FIG. 13